# EUROPEAN PATENT APPLICATION

(11) **EP 0 651 583 A2**
(43) Date of publication of application: **03.05.1995**
(21) Application number: 94307962.4
(22) Date of filing: 28.10.1994
(51) Int. Cl.: H04N 7/36, H04N 7/50, H04N 5/14

(54) **Motion compensator for digital image restoration**

(30) Priority: 28.10.1993 KR 9322575
(71) Applicant: LG ELECTRONICS INC., Seoul (KR)
(72) Inventor: Rim, Chai Yeol, Seodaemun-ku, Seoul (KR); Hong, Seong Wook, Seodaemun-ku, Seoul (KR)
(74) Representative: Cross, Rupert Edward Blount

(57) **Abstract**

A motion compensator for digital image restoration is disclosed which includes a motion compensating controller, a data interface, first and second field motion compensators, a frame motion compensator, and a first multiplexer, thereby receiving data of motion search area in multitude and enabling the motion compensation to be processed in real time.

## Description

### Background of the Invention

The present invention relates to a motion compensator for digital image restoration, which restores the original digital image by decoding digital data compressed using the motion of digital image, and more particularly, to a motion compensator for digital image restoration, which receives data of a motion search area in multitude and thereby compensates for the motion in real time.

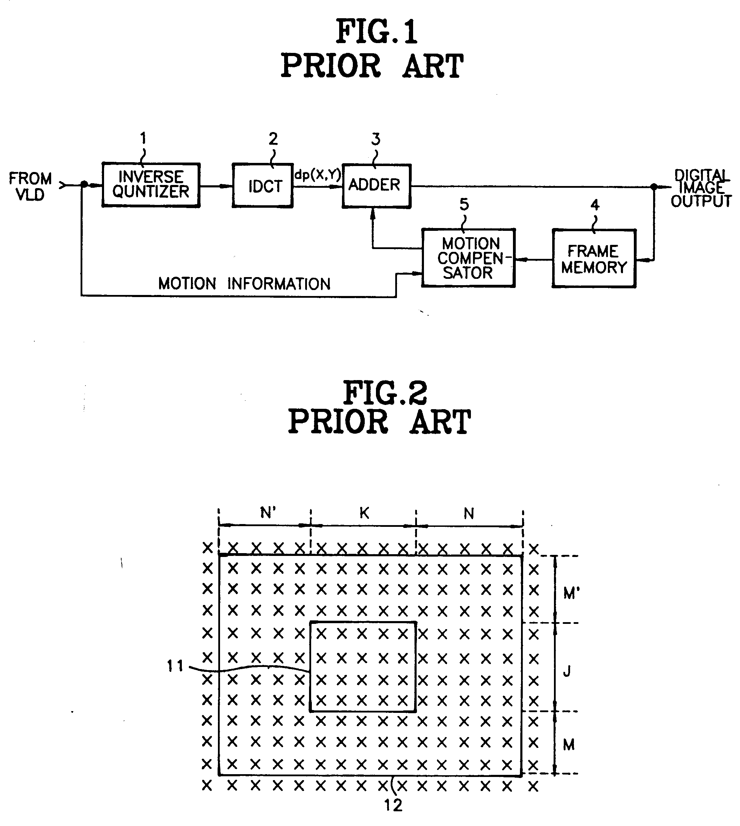

Generally, an image decoder for protecting the compressed digital image data and restoring it to the original digital image, as shown in Fig.1, comprises an inverse quantizer 1 for inverse-quantizing digital data input from a variable length decoder (VLD), an inverse discrete cosine transformer (IDCT) 2 for IDCT-transforming the output signal of inverse quantizer 1, an adder 3 for adding a motion-compensated estimation signal of the present frame to the output signal of IDCT 2, a frame memory 4 for temporarily storing and outputting the output signal of adder 3, and a motion compensator 5 for estimating a motion-compensated present frame by accessing the preceding frame data stored in frame memory 4 and using the motion information output from the VLD, and thereby outputting the estimated result to adder 3.

Roughly speaking, the image decoder inverse-quantizes the digital data input from the VLD in inverse quantizer 1, and IDCT-transforming it in IDCT 2. The result is input to adder 3.

Here, if the input digital data is a digital signal coded by motion estimation, motion compensator 5 accesses the data of the preceding frame stored in frame memory 4 and estimates the present frame where motion is compensated for according to the motion information output from the VLD. The estimated data is output to adder 3.

Adder 3 adds the signal output from IDCT 2 to the signal output from motion compensator 5, and outputs the added result as a digital image of the present invention. The output digital image is restored in frame memory 4 for use in estimation of frame.

Here, in the case where a macro block is used in coding units of motion information, i.e., motion vectors, the relationship between the macro block and the motion search area will be explained below with reference with Fig.2.

Given that the size of macro block 11 is JxK, that the vertical search range of motion search area 12 lies within -M' and M, and that the horizontal search range thereof is -N' and N, the size of motion search area 12 becomes$\text{(M'+M+J)x(N'+N+K).}$

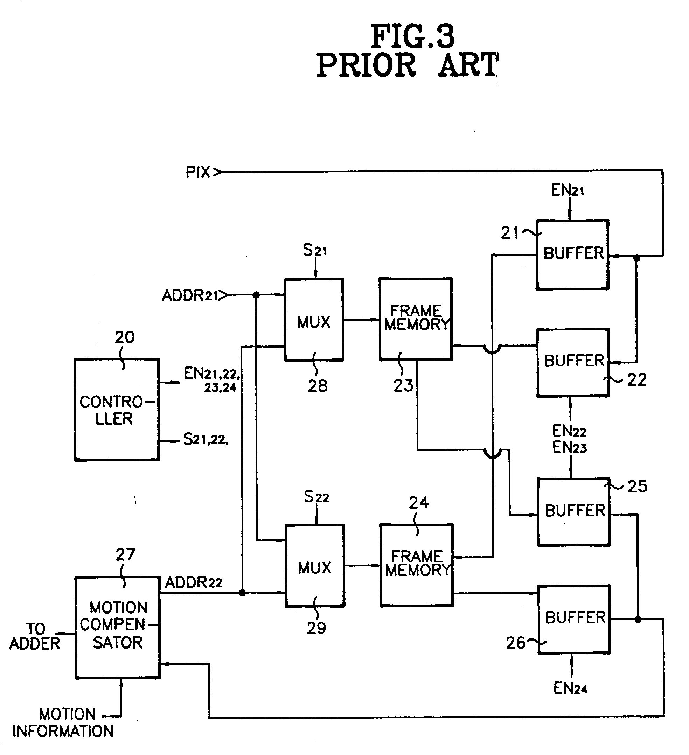

Fig.3 is a circuit diagram of a conventional motion compensator 5. Referring to Fig.3, motion compensator 5 comprises a controller 20 for outputting enable signals EB21-EN24 and switching signals S11 and S22 which are intended to control the motion compensation of an input digital image signal PIX, buffers 21 and 22 selectively enabled according to enable signals EN21 and EN22 output from controller 20 and for passing input digital image signal PIX, frame memories 24 and 23 for temporarily storing and outputting the output signals of buffers 21 and 22 in units of frame, buffers 25 and 26 selectively enabled according to enable signals EN23 and EN24 output from controller 20 and for passing the output signals of frame memories 23 and 24, a motion compensator 27 for outputting an address signal ADDR22 according to the motion information input from the VLD, compensating for the motion of digital image using the output signals of buffers 25 and 26, and outputting the compensation result to adder 3, and multiplexers 28 and 29 for selectively applying address signal ADDR21 input in synchronization with input digital image signal PIX and address signal ADDR22 output from motion compensator 27 to frame memories 23 and 24 according to switching signals S21 and S22 output from controller 20.

The conventional motion compensator 5 requires two frame memories 23 and 24 in order to compensate for the motion of digital image signal PIX input from adder 3. When one frame memory stores frame data of digital image signal PIX, motion compensator 27 accesses the frame data stored in the other frame memory for the purpose of motion compensation.

Specifically, when buffers 21 and 25 are enabled according to enable signals EN21 and EN23 output from controller 20 and multiplexers 28 and 29 selectively output address signals ADDR22 and ADDR21 according to switching signals S21 and S22, frame memory 24 sequentially stores digital image signal PIX of the present frame having passed buffer 21 according to address signal ADDR21 which multiplexer 29 selectively outputs, and frame memory 23 outputs stored digital image signal of the preceding frame according to address signal ADDR22 which multiplexer 28 selectively outputs and inputs the output to motion compensator 27 via buffer 25.

Next, buffers 22 and 26 are enabled according to enable signals EN22 and EN24 which controller 20 outputs, and multiplexers 28 and 29 selectively output address signals ADDR21 and ADDR22 according to switching signals S21 and S22. By doing so, frame memory 23 sequentially stores digital image signal PIX having passed buffer 22 according to address signal ADDR21 which multiplexer 28 selectively outputs, whereas frame memory 24 inputs the stored digital image signal to motion compensator 27 via buffer 26 according to address signal ADDR22 which multiplexer 29 outputs. This operation is repeatedly performed.

Given that motion information, that is, motion vector at pixel position (X,Y) is MV_{X},MV_{X} horizontally and vertically, motion compensator 27 accesses frame memories 23 and 24 where the digital image data of the preceding frame is stored, with address signal ADDR22 output, so that motion compensation is performed as in the following equations I-IV and the result is output to the adder.${\text{P}}_{\text{t}} {\text{(X,Y) = P}}_{\text{t-1}} {\text{(X-MV}}_{\text{X}} {\text{, Y-MV}}_{\text{Y}} \text{)}$${\text{P}}_{\text{t-1}} {\text{(X+0.5,Y) = {P}}_{\text{t-1}} {\text{(X,Y)+P}}_{\text{t-1}} \text{(X+1,Y)}/2}$${\text{P}}_{\text{t-1}} {\text{(X,Y+0.5) = {P}}_{\text{t-1}} {\text{(X,Y)+P}}_{\text{t-1}} \text{(X,Y+1)}/2}$${\text{P}}_{\text{t-1}} {\text{(X+0.5,Y+0.5) = {P}}_{\text{t-1}} {\text{(X,Y)+P}}_{\text{t-1}} {\text{(X+1,Y) +P}}_{\text{t-1}} {\text{(X,Y+1)+P}}_{\text{t-1}} \text{(X+1,Y+1)}/4}$

Here, Pₜ₋₁(X,Y) is digital image data of the preceding frame. Pₜ(X,Y) is the output signal of motion compensator 27 and added to the output signal of IDCT 2, thereby forming image data of the present invention. Equations II-IV are designed to form a pixel value for every half one pixel when the motion vector corresponds to half one pixel.

The conventional motion compensator, however, needs a great amount of calculation for motion compensation per pixel so that operation is performed by receiving only pixels requiring motion compensation from the frame memory. If the size of frame is large, the amount of calculation becomes extremely great and is very hard to perform in real time. Further, the calculation amount varies whether the motion vector is integer or half one pixel, thereby changing the overall time of calculation.

### Summary of the Invention

Therefore, in order to overcome such defects, it is an object of the present invention to provide a motion compensator which receives data of a motion search area so as to compensate for the motion of a macro block, and processes the motion compensation in parallel, thereby compensating for the motion of nearby macro blocks in real time.

To accomplish the object of the present invention, there is provided one embodiment of a motion compensator for digital image restoration comprising: a motion compensating controller for receiving a motion vector and a motion vector-type signal in synchronization with a clock and generating a motion displacement signal of the motion vector, start signals and a control signal, thereby controlling the entire operation of motion compensation; a data interface for sequentially shifting input data according to the control signal output from the motion compensating controller; first and second field motion compensators for receiving data necessary for motion compensation from data output from the data interface, according to the motion displacement signal and the start signals output from the motion compensating controller, performing vertical and horizontal interpolation with respect to the received data, and performing motion compensation in units of half one pixel with respect to field motion vector; a frame motion compensator for receiving necessary for motion compensation from the data output from said data interface according to the motion displacement signal and the start signals output from the motion compensating controller, thereby performing vertical and horizontal interpolation with respect to the received data and motion compensation in units of half one pixel with respect to frame motion vector; and a first multiplexer for selecting and outputting one of the output signals of the first and second field motion compensators and the frame motion compensator according to the control of the motion compensating controller.

To accomplish the object of the present invention, there is provided another embodiment of the motion compensator for digital image restoration comprising: a motion compensating controller for receiving a motion vector and a motion vector-type signal in synchronization with a clock and generating a motion displacement signal of the motion vector, start signals and a control signal, thereby controlling the entire operation of motion compensation; a data interface for sequentially shifting input data according to the control signal output from the motion compensating controller; first and second field/frame motion compensators for receiving data necessary for motion compensation from data output from the data interface, according to the motion displacement signal and the start signals output from the motion compensating controller, performing vertical and horizontal interpolation with respect to the received data, and performing motion compensation in units of half one pixel with respect to field/frame motion vector; and a first multiplexer for selecting and outputting one of the output signals of the first and second field/frame motion compensators according to the control of the motion compensating controller.

### Brief Description of the Drawings

Fig.1 is a circuit diagram of a general image decoder;
Fig.2 illustrates the relationship between a macro block and a motion search area;
Fig.3 is a circuit diagram of a conventional motion compensator;
Fig.4 is a circuit diagram of one embodiment of a motion compensator of the present invention;
Fig.5 is a detailed circuit diagram of the field motion compensator of Fig.4;
Fig.6 is a detailed circuit diagram of the frame motion compensator of Fig.4;
Figs.7A and 7B illustrate the sequence of pixel data input and output to/from a 16x16 macro block and slice buffer used in the motion compensator of the present invention;
Figs.8A and 8B illustrate the relationship of frame between time t and time t-1 for motion compensation in the motion compensator of the present invention;
Figs.9A, 9B and 9C illustrate timing of data input to the frame and frame motion compensators of Fig.4;
Fig.10 illustrates the operation of the data interface of Fig.4;
Fig.11 illustrates a signal input to the field and frame motion compensators when there is no delay in the data interface of Fig.4; and
Fig.12 is a circuit diagram of another embodiment of the motion compensator of the present invention.

### Detailed Description of the Invention

Hereinafter, preferred embodiments of the present invention will be described with reference to the attached drawings.

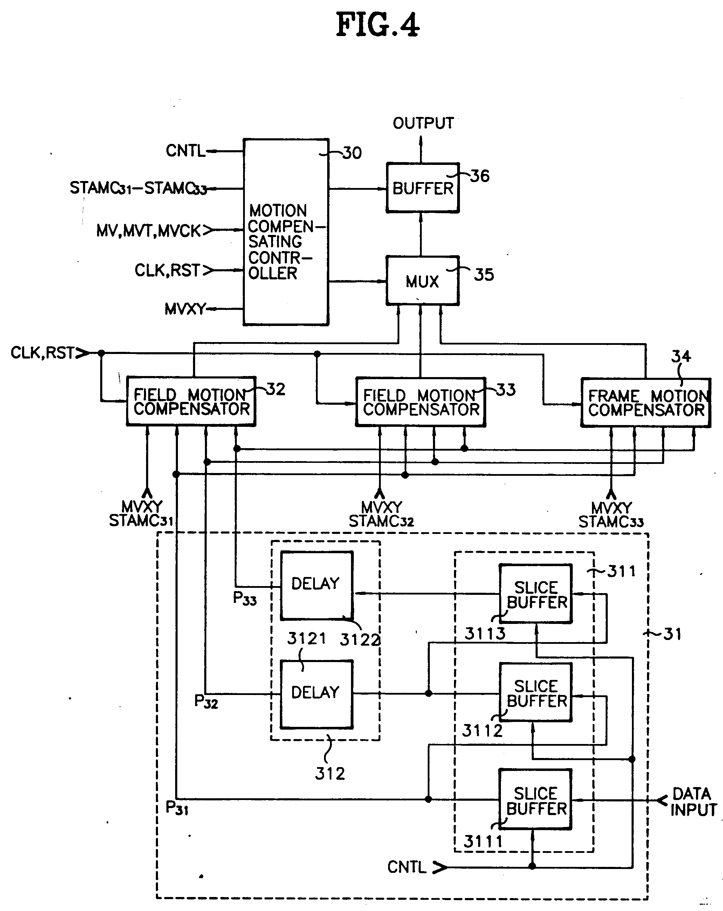

Referring to Fig.4, a motion compensator of the present invention comprises a motion compensating controller 30, a data interface 31, two field motion compensators 32 and 33, a frame motion compensator 34, a multiplexer 35, and a buffer 36.

Motion compensating controller 30 receives a motion vector MV and a motion vector-type signal MVT in synchronization with a clock MVCK, and generates a motion displacement signal MVXY of the motion vector, start signals STAMC31-STAMC33 and a control signal CNTL, thereby controlling the entire operation of motion compensation.

Data interface 31 sequentially shifts input data according to control signal CNTL output from motion compensating controller 30.

Data interface 31 is made up of a slice buffer portion 311 having a plurality of serially coupled slice buffers 3111, 3112 and 3113 and for sequentially shifting input data according to control signal CNTL output from motion compensating controller 30, and a delay portion 312 having a plurality of delays 3121 and 3122 and for delaying data output from remaining slice buffers at the reference of the first slice buffer respectively by 1-fold, 2-fold, 3-fold,... the number of vertical pixels of the macro block, and outputting the delayed data to field motion compensators 32 and 33 and frame motion compensator 34.

Here, slice buffers 3111, 3112 and 3113 of slice buffer portion 311 are provided as many as macro blocks corresponding to the vertical search area. Delays 3121 and 3122 of delay portion 312 are one fewer than the number of the slice buffers.

Field motion compensators 32 and 33 receives data necessary for motion compensation from data output from data interface 31, according to motion displacement signal MVXY and start signals STAMC31 and STAMC32 output from motion compensating controller 30, and performs vertical and horizontal interpolation with respect to the received data and motion compensation in units of half one pixel with respect to the field motion vector.

Frame motion compensator 34 receives necessary for motion compensation from the data output from data interface 31 according to motion displacement signal MVXY and start signals STAMC31 and STAMC32 output from motion compensating controller 30, thereby performing vertical and horizontal interpolation with respect to the received data and motion compensation in units of half one pixel with respect to the frame motion vector.

Multiplexer 34 selects and outputs one of the output signals of field motion compensators 32 and 33 and frame motion compensator 34 according to the control of motion compensating controller 30.

Buffer 36 outputs the signal output from multiplexer 35 as a motion compensating signal according to the control of motion compensating controller 30.

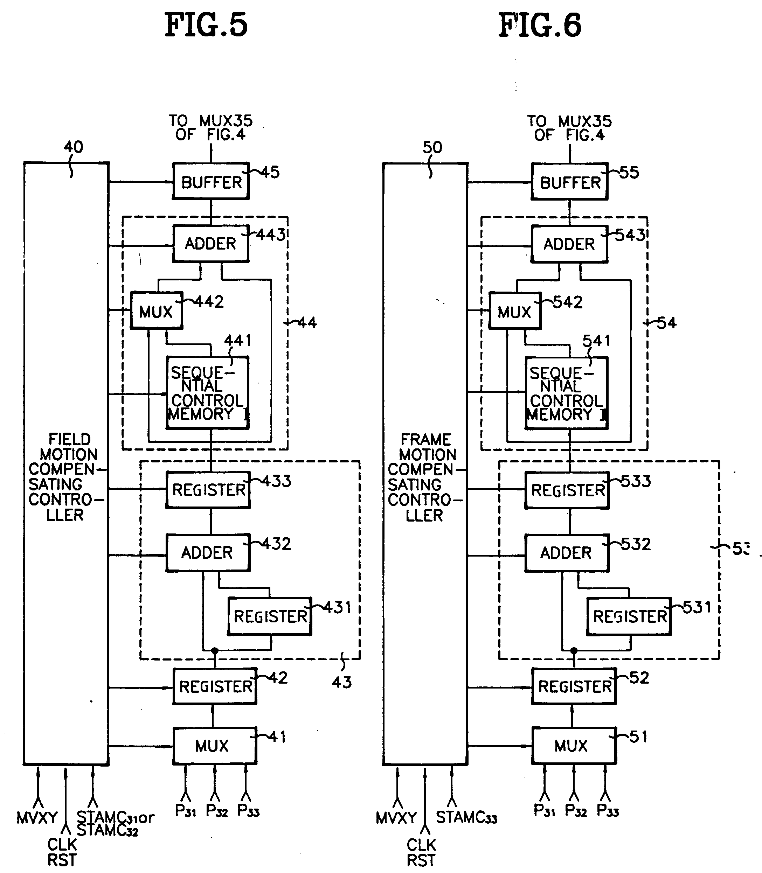

Referring to Fig.5, field motion compensators 32 and 33 each comprise a field motion compensating controller 40 for controlling the operation of compensating for the motion of field according to the motion displacement signal MVXY and starting signals STAMC31 and STAMC32 output from motion compensating controller 30, a multiplexer 41 for selectively outputting the data output from data interface 31 according to the control of field motion compensating controller 40, a register 42 for storing the data output from multiplexer 41 according to the control of field motion compensating controller 40, a vertical interpolator 43 for vertically interpolating the signal stored in register 42 according to the control of field motion compensating controller 40, a horizontal interpolator 44 for horizontally interpolating the signal output from vertical interpolator 43 according to the control of field motion compensating controller 40, and a buffer 45 for outputting the signal output from horizontal interpolator 44 to multiplexer 35 according to the control of field motion compensating controller 40.

Here, vertical interpolator 43 consists of a register 431 for temporarily storing the signal stored in register 42, an adder 432 for summing the signals output from registers 42 and 431 according to the control of field motion compensating controller 40, and a register 433 for temporarily storing the signal output from adder 432 according to the control of field motion compensating controller 40.

Horizontal interpolator 44 comprises a sequential control memory I (441) for temporarily storing the signal output from vertical interpolator 43 according to the control of field motion compensating controller 40, a multiplexer 442 for selectively outputting the signals output from sequential control memory I (441) and vertical interpolator 43 according to the control of field motion compensating controller 40, and an adder 443 for summing the signals output from multiplexer 442 and vertical interpolator 43 according to the control of field motion compensating controller 40 and outputting the summed result to buffer 45.

Here, sequential control memory I (441) is made up of a register of half the number of vertical pixels of the macro block in length.

Frame motion compensator 34, as shown in Fig.6, comprises a frame motion compensating controller 50 for controlling the operation of compensating for the motion of frame according to the motion displacement signal MVXY and starting signal STAMC33 output from motion compensating controller 30, a multiplexer 51 for selectively outputting the data output from data interface 31 according to the control of frame motion compensating controller 50, a register 52 for storing the data output from multiplexer 51 according to the control of frame motion compensating controller 50, a vertical interpolator 53 for vertically interpolating the signal stored in register 52 according to the control of frame motion compensating controller 50, a horizontal interpolator 54 for horizontally interpolating the signal output from vertical interpolator 53 according to the control of frame motion compensating controller 50, and a buffer 55 for outputting the signal output from horizontal interpolator 54 to multiplexer 35 according to the control of frame motion compensating controller 50.

Here, vertical interpolator 53 consists of a register 531 for temporarily storing the signal stored in register 52, an adder 532 for summing the signals output from registers 52 and 531 according to the control of frame motion compensating controller 50, and a register 533 for temporarily storing the signal output from adder 532 according to the control of frame motion compensating controller 50.

Horizontal interpolator 54 comprises a sequential control memory II (541) for temporarily storing the signal output from vertical interpolator 53 according to the control of frame motion compensating controller 50, a multiplexer 542 for selectively outputting the signals output from sequential control memory II (541) and vertical interpolator 53 according to the control of frame motion compensating controller 50, and an adder 543 for summing the signals output from multiplexer 542 and vertical interpolator 53 according to the control of frame motion compensating controller 50 and outputting the summed result to buffer 55.

Here, sequential control memory II (541) is made up of a register of the number of vertical pixels of the macro block in length.

The operation of the motion compensator constructed as above will be described below with reference to Figs.4-11.

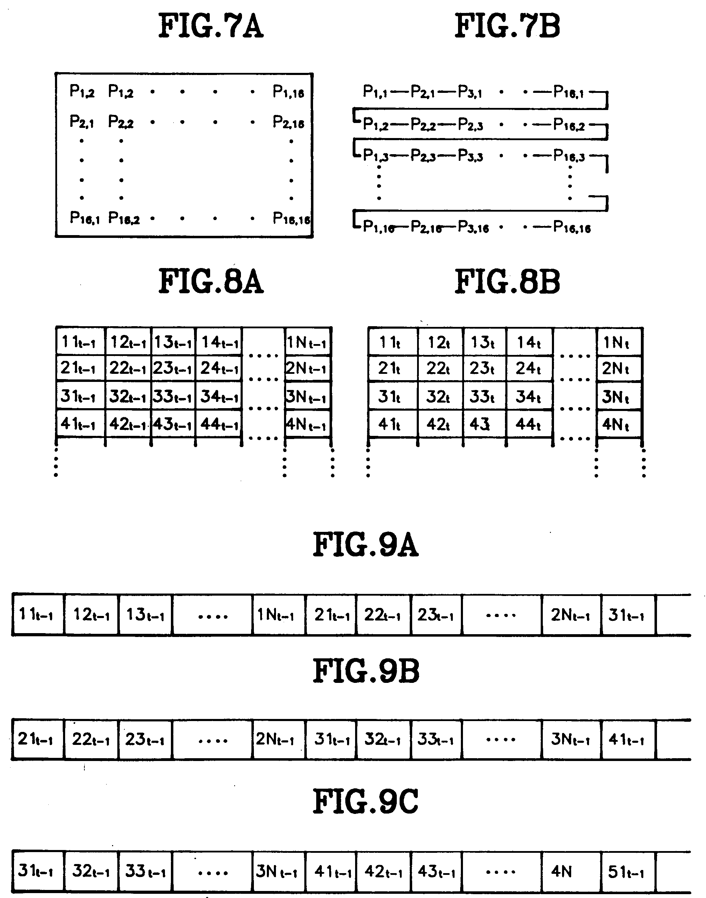

First, if the motion vector is a field vector, a range of 16 pixels from -8 to 7 is given as a search area horizontally and vertically. If the motion vector is a frame vector, a range of 32 pixels from -16 to 15 horizontally and vertically is set as a search area. The size of macro block is set to have 16x16 pixels as shown in Fig.7A.

Referring to Figs.8A and 8B, if a frame at preceding time t-1 and a frame at present time t are grouped by 16x16 pixels and the preceding and present frames are stored in units of blocks (ABₜ, ABₜ₋₁, for A and B are natural numbers such as 1, 2, 3, ...) for every macro block, for instance, pixels necessary in performing motion compensation with respect to macro block 22ₜ includes pixels of block 22ₜ₋₁ of preceding frame t-1 and pixels of eight nearby macro blocks 11ₜ₋₁, 12ₜ₋₁, 13ₜ₋₁, 21ₜ₋₁, 23ₜ₋₁, 31ₜ₋₁, 32ₜ₋₁, and 33ₜ₋₁. In order to perform motion compensation for macro block 23ₜ, pixels of macro block 23ₜ₋₁ at the same position as macro block 23ₜ in the preceding frame and pixels of eight nearby macro blocks are required.

The pixels of macro blocks of the preceding frame necessary for motion compensation are sequentially input as slice buffers 3111, 3112 and 3113 operate according to control signal CNTL output from motion compensating controller 30.

When pixels of macro blocks 11ₜ₋₁, 12ₜ₋₁, 13ₜ₋₁, ..., 1Nₜ₋₁ of the preceding frame t-1 are sequentially input and stored in slice buffer 3111 and pixels of macro blocks corresponding to one slice are finished being stored in slice buffer 3111, the stored pixels are re-output to slice buffer 3112 in the input sequence and then stored in sequence. Here, pixels of macro blocks 21ₜ₋₁, 22ₜ₋₁, 23ₜ₋₁, ..., 2Nₜ₋₁ of a next slice of the preceding frame are sequentially input and stored in slice buffer 3111. When the pixels are finished being stored in slice buffers 3111 and 3112, pixels of macro blocks 11ₜ₋₁, 12ₜ₋₁, 13ₜ₋₁, ..., 1Nₜ₋₁ stored in slice buffer 3112 are re-output to slice buffer 3113 in the input sequence and then stored in sequence. Pixels of macro blocks 21ₜ₋₁, 22ₜ₋₁, 23ₜ₋₁, ..., 2Nₜ₋₁ stored in slice buffer 3111 are re-output to slice buffer 3112 in the input sequence and then stored in sequence. Here, pixels of macro blocks 31ₜ₋₁, 32ₜ₋₁, 33ₜ₋₁, ..., 3Nₜ₋₁ of a next slice of the preceding frame are sequentially input and stored in slice buffer 3111.

Pixel data P_{E,F} (E and F are 1, 2, 3,..., 16) of the respective macro blocks input and stored in slice buffers 3111, 3112 and 3113 are input in a sequence where one row vertically from the first pixel P_{1,1} of the first row to the final pixel P_{16,1} is input and then the second colum vertically from the first pixel P_{1,2} of the second row to the final pixel P_{16,2} is input, as shown in Fig.7B.

The inputting and storing of pixels of macro blocks of the preceding frame t-1 are repeated until the motion compensation of the present frame t is finished.

The pixel data of the preceding frame stored in slice buffers 3111, 3112, and 3113 are delayed by the number of vertical pixels and twice the number of vertical pixels of the respective macro blocks, in other words, by 16 pixels and 32 pixels in delays 3121 and 3122. The delayed data are input to field motion compensators 32 and 33 and frame motion compensator 34 along with the pixel data of the preceding frame output from slice buffer 3111.

Specifically, the macro blocks of the preceding frame t-1 are input in synchronization with rows in slice buffers 3111, 3112 and 3113 and output as shown in Figs.9A, 9B and 9C. The pixel data are, however, delayed by 16 pixels and 32 pixels, respectively so that, while the pixel data of the third row of macro block 33ₜ₋₁ is output from slice buffer 3111, the pixel data of the second row of macro block 23ₜ₋₁ is output from delay 3121 and the pixel data of the first row of macro block 13ₜ₋₁ is output from delay 3122.

In other words, pixel data of macro blocks P and Q of the respective slices are delayed by 16 pixels and input to input ports P31, P32 and P33 of field motion compensators 32 and 33 and frame motion compensator 34.

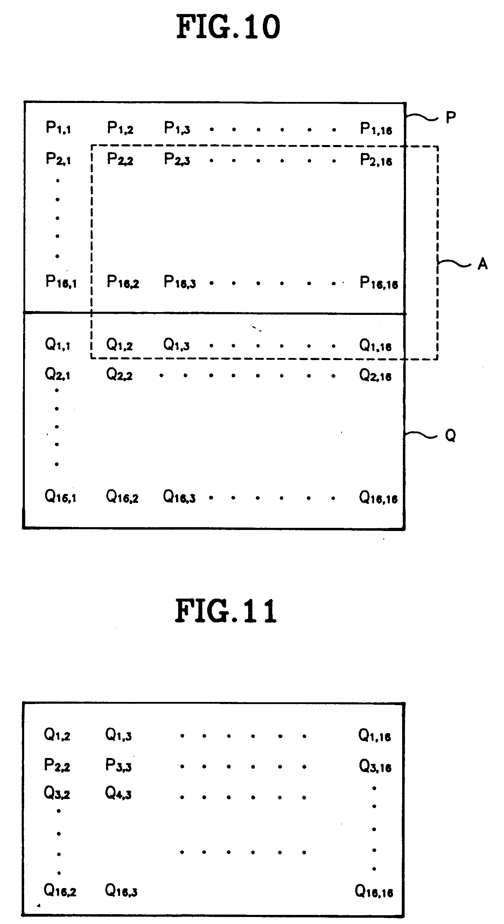

As shown in Fig.10, in the case where macro block A to be motion-compensated lies across macro block P and macro block Q of a next slice, pixel data P_{2,2}, P_{3,2},..., P_{16,2} of macro block P is input and then pixel data Q_{1,2} of macro block Q of a next slice is input in field motion compensators 32 and 33 and frame motion compensator 34. After pixel data P_{2,3}, P_{3,3},..., P_{16,3} of macro block P is input, pixel data Q_{1,3} of macro block Q of a next slice is input.

Here, if the pixel data input to input ports P31, P32 and P33 of field motion compensators 32 and 33 and frame motion compensator 34 are not delayed by 16 pixels, pixel data Q_{1,2} of macro block Q are input, and then pixel data P_{2,2}, P_{3,2},..., P_{16,2} of macro block P are input, and after pixel data Q_{1,3} of macro block Q is input, pixel data P_{2,3}, P_{3,3},..., P_{16,3} of macro block P are input. This mingles pixels of a macro block to be motion-compensated as shown in Fig.11. In Fig.11, the pixels of macro block Q are raised as compared with the pixels of macro block P, to thereby preclude motion compensation. The pixels of macro block Q must be placed below those of macro block P.

Here, three slice buffers 3111, 3112 and 3113 are required because they should be provided as many as macro blocks corresponding to vertical search areas. Two delays 3121 and 3122 are needed.

Field motion compensators 32 and 33 and frame motion compensator 34 selectively operate according to the control of motion compensating controller 30. If the motion vector type is field, since motion compensation is performed in units of field, field motion compensators 32 and 33 operate so that motion compensation is performed for one field, respectively. If the motion vector type is frame, since the motion compensation is performed in units of frame, frame motion compensator 34 operates to perform motion compensation for frame.

Field motion compensators 32 and 33 and frame motion compensator 34 select only data necessary for motion compensation of the respective macro blocks of the present frame t from the pixel data output from slice buffer 3111 and delays 3121 and 3122. For instance, in the case where the motion of macro block 22ₜ is compensated for, pixels of macro block necessary when macro block 22ₜ₋₁ and eight nearby blocks are sequentially input are selected and used. The selected data are vertically and horizontally interpolated so that motion compensation is performed by a resolution of half one pixel with respect to field/frame vectors.

In other words, field motion compensators 32 and 33 are designed to compensate for the motion of first and second fields, respectively. Multiplexer 41 selects data necessary for motion compensation from the pixel data rows of the signal input from slice buffer 3111 and delays 3121 and 3122 to input ports P31, P32 and P33 according to the control of field motion compensating controller 40. The selected data are stored in register 42.

The signal stored in register 42 is vertically interpolated in units of half one pixel according to the control of field motion compensating controller 40 in vertical interpolator 43. Specifically, the signal stored in and output from register 42 is stored in register 431 according to the control of field motion compensating controller 40, and then added to the signal output from register 42 in adder 432 for the purpose of vertical interpolation in units of half one pixel. The added signal is temporarily stored in register 433. The signal stored in register 433 is horizontally interpolated according to the control of field motion compensating controller 40 in horizontal interpolator 44. Specifically, the signal stored in and output from register 433 according to the control of field motion compensating controller 40 is stored in sequential control memory I (441) of the length of half the number of vertical pixels of a macro block, and then input to and selected in multiplexer 442 together with the signal output from register 433. The selected signal is added to the signal output from register 433 in adder 443 for the purpose of horizontal interpolation and then output to buffer 45. The signal temporarily stored in buffer 45 is output to multiplexer 35 according to the control of field motion compensating controller 40.

Here, eight sets of pixel data, i.e., pixel data corresponding to one row of a macro block are sequentially stored in sequential control memory I (441). Adders 432 and 443 do not always but add and output the two input signals according to the control of field motion compensating controller 40 only when vertical and horizontal interpolations are required. When the interpolations are not necessary, the signals output from registers 42 and 433 pass without change.

Frame motion compensator 34 operates in the same way as field motion compensators 32 and 33 in order to compensate for the motion of frame. Here, sequential control memory II (541), made up of a register of the length of 16 pixels corresponding to the number of vertical pixels of a macro block, performs horizontal interpolation, since frame motion compensator 34 compensates for the motion of frame.

The data motion-compensated and output from field motion compensators 32 and 33 and frame motion compensator 34 are selected by multiplexer 35 according to the control of motion compensating controller 30 and output via buffer 36.

Motion compensating controller 30 receives motion vector MV and motion vector type signal in synchronization with clock MVCK, thereby generating motion displacement signal MVXY for motion vector and start signals STAMC31-STAMC33 for operating two field motion compensators 32 and 33 and frame motion compensator 34.

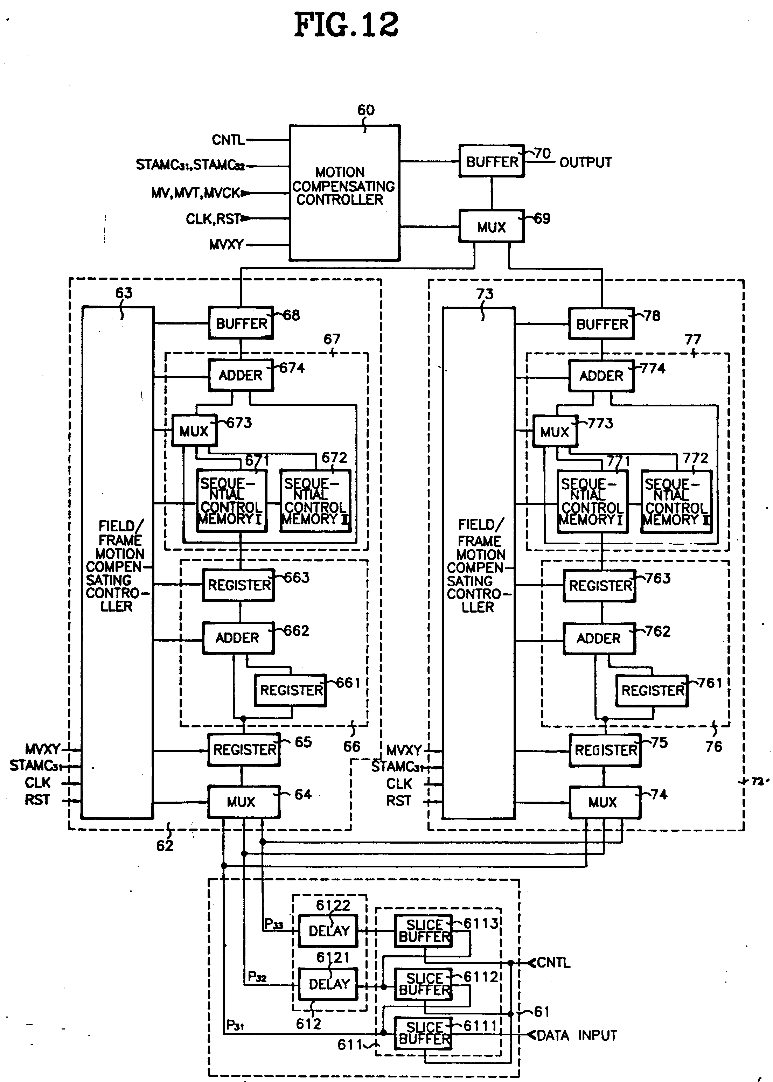

Another embodiment of the motion compensator for digital image restoration of the present invention, as shown in Fig.12, comprises a motion compensating controller 60, a data interface 61, two field/frame motion compensators 62 and 72, a multiplexer 35, and a buffer 36.

Here, data interface 61, multiplexer 69 and buffer 70 are the same as those of the first embodiment of the motion compensator for digital image restoration of the present invention. Motion compensating controller 60 is similar to the first embodiment of the present invention. Field/frame motion compensators 62 and 72 are formed by putting together field motion compensators 32 and 33 and frame motion compensator 34 of the first embodiment of the present invention.

The second embodiment of the motion compensator for digital image restoration of the present invention will be described below in detail.

Motion compensating controller 60 receives a motion vector MV and a motion vector-type signal MVT in synchronization with a clock MVCK, and generates a motion displacement signal MVXY of the motion vector, start signals STAMC31, STAMC32 and a control signal CNTL, thereby controlling the entire operation of motion compensation.

Data interface 61 is made up of a slice buffer portion 611 having a plurality of serially coupled slice buffers and for sequentially shifting input data according to control signal CNTL output from motion compensating controller 60, and a delay portion 612 having a plurality of delays and for delaying data output from remaining slice buffers at the reference of the first slice buffer respectively by 1-fold, 2-fold, 3-fold,... the number of vertical pixels of the macro block, and outputting the delayed data to field/frame motion compensators 62 and 72. Data interface 61 sequentially shifts input data according to control signal CNTL output from motion compensating controller 60.

Here, the slice buffers of slice buffer portion 611 are provided as many as macro blocks corresponding to the vertical search area. The delays of delay portion 612 are one fewer than the number of the slice buffers.

Field/frame motion compensators 62 and 72 receive data necessary for motion compensation from data output from data interface 61, according to motion displacement signal MVXY and start signals STAMC31 and STAMC32 output from motion compensating controller 60, thereby performing vertical and horizontal interpolation with respect to the received data and adaptively performing motion compensation in units of half one pixel with respect to the field/frame motion vector.

Multiplexer 69 selects and outputs one of the output signals of field/frame motion compensators 62 and 72 according to the control of motion compensating controller 60.

Buffer 70 outputs the signal output from multiplexer 69 as a motion compensating signal according to the control of motion compensating controller 60.

Field/frame motion compensators 62 and 72 comprise field/frame motion compensating controllers 63 and 73 for controlling the operation of compensating for the motion of field and frame according to the motion displacement signal MVXY and starting signals STAMC31 and STAMC32 output from motion compensating controller 60, multiplexers 64 and 74 for selectively outputting the data output from data interface 61 according to the control of field/frame motion compensating controller 63 and 73, registers 65 and 75 for storing the data output from multiplexers 64 and 74 according to the control of field/frame motion compensating controllers 63 and 73, vertical interpolators 66 and 76 for vertically interpolating the signal stored in registers 65 and 75 according to the control of field/frame motion compensating controllers 63 and 73, horizontal interpolators 67 and 77 for horizontally interpolating the signal output from vertical interpolators 66 and 76 according to the control of field/frame motion compensating controllers 63 and 73, and buffers 68 and 78 for outputting the signal output from horizontal interpolators 67 and 77 to multiplexer 69 according to the control of field/frame motion compensating controllers 63 and 73.

Here, similar to vertical interpolators 43 and 53 of the first embodiment of the present invention, vertical interpolators 66 and 76 consist of registers 661 and 761 for temporarily storing the signals stored in registers 65 and 75, adders 662 and 762 for summing the signals output from registers 65, 661, 75 and 761 according to the control of field/frame motion compensating controllers 63 and 73, and registers 663 and 763 for temporarily storing the signals output from adders 662 and 762 according to the control of field/frame motion compensating controllers 63 and 73.

Horizontal interpolators 67 and 77 comprise sequential control memories I (671 and 771) for temporarily storing the signals output from vertical interpolators 66 and 76 according to the control of field/frame motion compensating controllers 63 and 73, sequential control memories II (672 and 772) for temporarily storing the signals output from vertical interpolators 66 and 76 according to the control of field/frame motion compensating controllers 63 and 73, multiplexers 673 and 773 for selectively outputting the signals output from sequential control memories I (671 and 771), sequential control memories II (672 and 772) and vertical interpolators 66 and 76 according to the control of field/frame motion compensating controllers 63 and 73, and adders 674 and 774 for summing the signals output from multiplexers 673 and 773 and vertical interpolators 66 and 76 according to the control of field/frame motion compensating controllers 63 and 73, and outputting the summed result to buffers 68 and 78.

Here, sequential control memories I (671 and 771) are made up of registers of half the number of vertical pixels of the macro block in length. Sequential control memories II (672 and 772) are made up of registers of the number of vertical pixels of the macro block in length.

The second embodiment of the motion compensator for digital image restoration of the present invention uses a fact that field motion compensators 32 and 33 and frame motion compensator 34 do not operate simultaneously but exclusively. Horizontal interpolators 67 and 77 of field/frame motion compensators 62 and 72 comprise both of sequential control memories I (671 and 771) and sequential control memories II (672 and 772) so that they are selectively controlled by field/frame compensating controllers 63 and 73 to thereby perform the horizontal interpolation of field or frame.

Specifically, in the case where the motion vector type is field, two field/frame compensators 62 and 72 operate according to the control of motion compensating controller 60, thereby performing motion compensation with respect to one field, respectively. In other words, field/frame motion compensating controllers 63 and 73 operate sequential control memories I (671 and 771) only, in performing the horizontal interpolation of field. The signals output from registers 663 and 763 are input an stored in sequential control memories I (671 and 771). The data output from sequential control memories I (671 and 771) are input to multiplexers 673 and 773 together with the signals output from registers 663 and 763.

When the motion vector type is frame, only one of two field/frame compensators 62 and 72 operates according to the control of motion compensating controller 60 and performs motion compensation with respect to frame. Specifically, selected field/frame motion compensating controllers 63 and 73 operate sequential control memories II (672 and 772) only, thereby performing the horizontal interpolation of frame.

The signals output from registers 663 and 763 are input and stored in sequential control memories II (672 and 772). The data output from sequential control memories II (672 and 772) are input to multiplexers 673 and 773 together with the signals output from registers 663 and 763. Other operations of the second embodiment of the motion compensator of the present invention is the same as those of the first embodiment thereof.

As described above, the present invention receives data of motion search area in multitude in compensating for the motion of macro block, thereby enabling the motion compensation to be processed in real time.

## Claims

1. A motion compensator for digital image restoration comprising:
a motion compensating controller for receiving a motion vector and a motion vector-type signal in synchronization with a clock and generating a motion displacement signal of the motion vector, start signals and a control signal, thereby controlling the entire operation of motion compensation;
a data interface for sequentially shifting input data according to said control signal output from said motion compensating controller;
first and second field motion compensators for receiving data necessary for motion compensation from data output from said data interface, according to said motion displacement signal and said start signals output from said motion compensating controller, performing vertical and horizontal interpolation with respect to the received data, and performing motion compensation in units of half one pixel with respect to field motion vector;
a frame motion compensator for receiving necessary for motion compensation from the data output from said data interface according to said motion displacement signal and said start signals output from said motion compensating controller, thereby performing vertical and horizontal interpolation with respect to the received data and motion compensation in units of half one pixel with respect to frame motion vector; and
a first multiplexer for selecting and outputting one of the output signals of said first and second field motion compensators and said frame motion compensator according to the control of said motion compensating controller.

2. A motion compensator for digital image restoration comprising:
a motion compensating controller for receiving a motion vector and a motion vector-type signal in synchronization with a clock and generating a motion displacement signal of the motion vector, start signals and a control signal, thereby controlling the entire operation of motion compensation;
a data interface for sequentially shifting input data according to said control signal output from said motion compensating controller;
first and second field/frame motion compensators for receiving data necessary for motion compensation from data output from said data interface, according to said motion displacement signal and said start signals output from said motion compensating controller, performing vertical and horizontal interpolation with respect to the received data, and performing motion compensation in units of half one pixel with respect to field/frame motion vector; and
a first multiplexer for selecting and outputting one of the output signals of said first and second field/frame motion compensators according to the control of said motion compensating controller.

3. A motion compensator for digital image restoration as claimed in claim 1 or in claim 2, further comprising a buffer for outputting the signal output from said first multiplexer as a motion compensating signal according to the control of said motion compensating controller.

4. A motion compensator for digital image restoration as claimed in claim 1, wherein said data interface comprises:
a slice buffer portion having a plurality of serially coupled slice buffers and for sequentially shifting input data according to said control signal output from said motion compensating controller; and
a delay portion having a plurality of delays and for delaying data output from remaining slice buffers at the reference of the first slice buffer respectively by 1-fold, 2-fold, 3-fold,... the number of vertical pixels of a macro block, and outputting the delayed data to said first and second field motion compensators and said frame motion compensator.

5. A motion compensator for digital image restoration as claimed in claim 2, wherein said data interface comprises:
a slice buffer portion having a plurality of serially coupled slice buffers and for sequentially shifting input data according to said control signal output from said motion compensating controller; and
a delay portion having a plurality of delays and for delaying data output from remaining slice buffers at the reference of the first slice buffer respectively by 1-fold, 2-fold, 3-fold,... the number of vertical pixels of a macro block, and outputting the delayed data to said first and second field/frame motion compensators.

6. A motion compensator for digital image restoration as claimed in claim 4 or claim 5, wherein said slice buffers are provided as many as macro blocks corresponding to the vertical search area.

7. A motion compensator for digital image restoration as claimed in claim 6, wherein said delays are provided one fewer than the number of said slice buffers.

8. A motion compensator for digital image restoration as claimed in claim 1, wherein said first and second field motion compensators each comprise:
a field motion compensating controller for controlling the operation of compensating for the motion of field according to said motion displacement signal and said starting signals output from said motion compensating controller;
a second multiplexer for selectively outputting the data output from said data interface according to the control of said field motion compensating controller;
a first register for storing the data output from said second multiplexer according to the control of said field motion compensating controller;
a vertical interpolator for vertically interpolating the signal stored in said first register according to the control of said field motion compensating controller;
a horizontal interpolator for horizontally interpolating the signal output from said vertical interpolator according to the control of said field motion compensating controller; and
a buffer for outputting the signal output from said horizontal interpolator to said multiplexer according to the control of said field motion compensating controller.

9. A motion compensator for digital image restoration as claimed in claim 8, wherein said vertical interpolator comprises:
a second register for temporarily storing the signal stored in said first register;
an adder for summing the signals output from said first and second registers according to the control of said field motion compensating controller; and
a third register for temporarily storing the signal output from said adder according to the control of said field motion compensating controller.

10. A motion compensator for digital image restoration as claimed in claim 8, wherein said horizontal interpolator comprises:
a sequential control memory I for temporarily storing the signal output from said vertical interpolator according to the control of said field motion compensating controller;
a third multiplexer for selectively outputting the signals output from said sequential control memory I and said vertical interpolator according to the control of said field motion compensating controller; and
an adder for summing the signals output from said third multiplexer and said vertical interpolator according to the control of said field motion compensating controller and outputting the summed result to said buffer.

11. A motion compensator for digital image restoration as claimed in claim 2, wherein said first and second field/frame motion compensators each comprise:
a field/frame motion compensating controller for controlling the operation of compensating for the motion of field and frame according to said motion displacement signal and said starting signals output from said motion compensating controller;
a second multiplexer for selectively outputting the data output from said data interface according to the control of said field/frame motion compensating controller;
a first register for storing the data output from said second multiplexer according to the control of said field/frame motion compensating controller;
a vertical interpolator for vertically interpolating the signal stored in said first register according to the control of said field/frame motion compensating controller;
a horizontal interpolator for horizontally interpolating the signal output from said vertical interpolator according to the control of said field/frame motion compensating controller; and
a buffer for outputting the signal output from said horizontal interpolator to said multiplexer according to the control of said field/frame motion compensating controller.

12. A motion compensator for digital image restoration as claimed in claim 11, wherein said vertical interpolator comprises:
a second register for temporarily storing the signal stored in said first register;
an adder for summing the signals output from said first and second registers according to the control of said field/frame motion compensating controller; and
a third register for temporarily storing the signal output from said adder according to the control of said field/frame motion compensating controller.

13. A motion compensator for digital image restoration as claimed in claim 11, wherein said horizontal interpolator comprises:
a sequential control memory I for temporarily storing the signal output from said vertical interpolator according to the control of said field/frame motion compensating controller;
a sequential control memory II for temporarily storing the signal output from said vertical interpolator according to the control of said field/frame motion compensating controller;
a third multiplexer for selectively outputting the signals output from said sequential control memory I, said sequential control memory I and said vertical interpolator according to the control of said field/frame motion compensating controller; and
an adder for summing the signals output from said third multiplexer and said vertical interpolator according to the control of said field/frame motion compensating controller and outputting the summed result to said buffer.

14. A motion compensator for digital image restoration as claimed in claim 10 or claim 13, wherein said sequential control memory I comprises a register of half the number of vertical pixels of a macro block in length.

15. A motion compensator for digital image restoration as claimed in claim 1, wherein said frame motion compensator comprises:
a frame motion compensating controller for controlling the operation of compensating for the motion of frame according to said motion displacement signal and said starting signal output from said motion compensating controller;
a second multiplexer for selectively outputting the data output from said data interface according to the control of said frame motion compensating controller;
a first register for storing the data output from said second multiplexer according to the control of said frame motion compensating controller;
a vertical interpolator for vertically interpolating the signal stored in said first register according to the control of said frame motion compensating controller;
a horizontal interpolator for horizontally interpolating the signal output from said vertical interpolator according to the control of said frame motion compensating controller; and
a buffer for outputting the signal output from said horizontal interpolator to said first multiplexer according to the control of said frame motion compensating controller.

16. A motion compensator as claimed in claim 15 wherein said vertical interpolator comprises:
a second register for temporarily storing the signal stored in said first register;
an adder for summing the signals output from said first and second registers according to the control of said frame motion compensating controller; and
a third register for temporarily storing the signal output from said adder according to the control of said frame motion compensating controller.

17. A motion compensator for digital image restoration as claimed in claim 15, wherein said horizontal interpolator comprises:
a sequential control memory II for temporarily storing the signal output from said vertical interpolator according to the control of said frame motion compensating controller;
a third multiplexer for selectively outputting the signals output from said sequential control memory II and said vertical interpolator according to the control of said frame motion compensating controller; and
an adder for summing the signals output from said third multiplexer and said vertical interpolator according to the control of said frame motion compensating controller and outputting the summed result to said buffer.

18. A motion compensator for digital image restoration as claimed in claim 17 or claim 13, wherein said sequential control memory II comprises a register of the number of vertical pixels of a macro block in length.
